# EUROPEAN PATENT APPLICATION

(11) **EP 4 557 277 A1**
(43) Date of publication of application: **21.05.2025**
(21) Application number: 25167533.6
(22) Date of filing: 19.02.2020
(51) Int. Cl.: G10L 15/22, A24F 40/53, A24F 40/60, A24F 40/65, A24F 47/00, A24F 40/49

(54) **SMOKING SUBSTITUTE DEVICE**

(62) Divisional of application: 20158330.9
(71) Applicant: Imperial Tobacco Limited, Bristol BS3 2LL (GB)
(72) Inventor: MILLWARD, Timothy, Bristol, BS3 2LL (GB); THOMAS, Dave, Bristol, BS3 2LL (GB)
(74) Representative: Mewburn Ellis LLP

(57) **Abstract**

A smoking substitute device configured to generate an aerosol from an aerosol forming substrate, the device comprising an audio interface. The smoking substitute device is configured to perform a speech control function that includes: recognising words spoken by a user in an audio signal obtained by the audio interface; using a natural language processing model to analyse the recognised words spoken by the user; and controlling an operation of the smoking substitute device based on the analysis of the recognised words spoken by the user.

## Description

### TECHNICAL FIELD

The present invention relates to a smoking substitute device comprising an audio interface.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products. Some smoking substitute systems use smoking substitute articles (also referred to as a "consumables") that are designed to resemble a traditional cigarette and are cylindrical in form with a mouthpiece at one end.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu^{™} e-cigarette. The myblu^{™} e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO^{™} e-cigarette. The blu PRO^{™} e-cigarette is an open system device which includes a main body, a (refillable) tank, and a mouthpiece. The main body and tank are physically and electrically coupled together by screwing one to the other. The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

An example of the HT approach is the IQOS^{™} smoking substitute device from Philip Morris Ltd. The IQOS^{™} smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HT approach is the device known as "Glo"^{™} from British American Tobacco p.l.c. Glo^{™} comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

Users of smoking substitute devices may wish to operate their devices without needing to learn a prescribed set of preconfigured instructions or operations. Further, users of smoking substitute devices may be concerned that their device could be used by another individual who should not be permitted to activate the device, e.g. a thief, or a child. Additionally, users of smoking substitute devices may be concerned that a device which operates in connection with a wider network is prone to security breaches, leaving their personal data exposed.

The present invention has been devised in light of the above considerations.

### Summary of the Invention

A first aspect of the invention may provide:
A smoking substitute device comprising an audio interface;
wherein the smoking substitute device is configured to perform a speech control function that includes:
recognising words spoken by a user in an audio signal obtained by the audio interface;
using a natural language processing model to analyse the recognised words spoken by the user; and
controlling operation of the smoking substitute device based on the analysis of the recognised words spoken by the user.

Natural Language Processing, typically shortened as "NLP", can be understood as a subset of artificial intelligence and is a type of speech recognition technique intended to allow an inference model (used interchangeably herein with the terms "natural language processing model" and "natural language processing inference model") to derive semantic meaning from words expressed in a natural language form (e.g. as expressed by a human), rather than words expressed in accordance with a defined protocol. Thus, the step of "using a natural language processing model to analyse the recognised words spoken by the user" may be expressed as "using a natural language processing model to analyse the recognised words spoken by the user to determine semantic meaning". Most NLP techniques rely on machine learning techniques to derive meaning and/or context from words expressed in a natural language form.

Preferably, the smoking substitute device is configured to generate an aerosol from an aerosol forming substrate.

A natural language processing model can be understood as a model that implements natural language processing.

Since a natural language processing model permits use of more natural language for controlling operation of the device (compared e.g. with a more simplistic command driven model that might require a user to utter specific words or phrases in accordance with a defined protocol), a better user experience can be achieved.

The speech control function may include biometrically recognising words spoken by the user, e.g. using a voice recognition function, as described below.

The natural language processing model may analyse the semantic meaning of words spoken by the user, and/or the language dialect spoken by the user.

Preferably, the natural language processing model is stored on and configured to be run by the smoking substitute device itself, i.e. without elements of the model being stored or run on an external device. By implementing the natural language processing model on the smoking substitute device itself, users can control their device using natural language, without suffering from the Quality of Service (QoS latency issues associated with implementing the natural language processing on a cloud service.

However, in other examples, the natural language processing model may be partially or fully stored on or run on a processor external to the smoking substitute device. For example, the natural language processing model may be partially or fully run on a private server system. Preferably, the private server system is inaccessible to unauthorised persons.

Preferably, the speech control function includes:
using a natural language processing model to analyse the recognised words spoken by the user and to recognise a command expressed in a natural language form within the recognised words; and
controlling operation of the smoking substitute device based on the analysis of the recognised words spoken by the user to implement the recognised command.

Importantly, the command expressed in a natural language form need not be expressed in accordance with a formal protocol in order to be recognised using the natural language processing model.

For example, the speech control function may be configured to control operations of the smoking substitute device based on the analysis of phrases including: "please provide connection status", "please provide connection configuration", "please provide current battery level", "please provide anticipated battery depletion", "please provide nicotine used to date", "can we set a nicotine quota?", "what is my nicotine quota to date?", "what is my current pod level", "what flavour is the current pod?", "please add my name to the current vape device profile", "please add this email to the current vape device profile"; or phrases which are substantially semantically similar to the abovementioned phrases. Additionally or alternatively, the speech control function may be configured to control operations of the smoking substitute device based on the analysis of phrases which are regional dialect and/or accent variations of the abovementioned phrases.

By way of example, the recognised command may be a command to initiate wireless pairing of the smoking substitute device with an external device (e.g. Bluetooth pairing with a mobile device), but this command may have been expressed in a natural language form such as "can you please connect to my phone" or "connect to phone please", rather than in accordance with a defined protocol (which may require the user to express the command using one or more specifically worded voice commands or sensor sequences).

By way of example, the recognised command may be a command to disable one or more functions of the device such that the one or more functions of the device do not work until those functions are re-enabled, but this command may have been expressed in a natural language form such as "please lock" or "lock my device please", rather than in accordance with a defined protocol (which may require the user to express the command using one or more specifically worded voice commands).

By way of example, the recognised command may be a command to display usage statistics (e.g. on a display of the device or on a display of a mobile device wirelessly connected to the smoking substitute device), but this command may have been expressed in a natural language form such as "show me some stats" or "what's my usage", rather than in accordance with a defined protocol (which may require the user to express the command using one or more specifically worded voice commands).

In some examples, the command recognised by the natural language processing model may be accompanied by an associated confidence level, indicating a level of confidence that the command has been correctly recognised. The confidence level would typically be produced by the natural language model itself. The/each confidence level would typically be expressed as a probability, e.g. with 0.8 indicating an 80% probability that the command has been correctly recognised. The probability may be expressed as a probability range. The/each confidence level may be expressed as a sigmoid probability, that is a probability corresponding to the value of a sigmoid function.

By way of example, the model may analyse the recognised words spoken by the user and assign a respective confidence level to each of a number of possible commands, with the confidence level indicating that the recognised words contain that possible command. The possible command with the highest associated confidence level may then be recognised as a recognised command expressed in a natural language form within the recognised words, with that associated confidence level being the confidence level associated with the recognised command. Additionally, the model may recognise semantic meaning and/or language dialects spoken by the user. In some examples, a plurality of models are run via parallel processing with response times of 2 ms or less. In some examples the plurality of models includes one or more of: a model to recognise words, a model implementing predetermined knowledge of a lexicon to recognise semantic meaning, and a model to recognise the language dialect. Speech to text tokenising may be used.

The smoking substitute device may be configured to, if a confidence level associated with a command recognised by the natural language processing model is less than a predetermined threshold value, perform a verification function to verify the command intended to be executed by the user.

In this way, the device is able to verify that only operations which the users intends to be carried out are executed. This increases the fidelity of the operations of the device with respect to the user's commands.

If the confidence level is expressed a probability, the predetermined threshold may be, e.g. 80% or higher, 90% or higher, or more preferably 95% or higher. A predetermined threshold of 80% or higher is thought beneficial to prevent against unauthorised use, e.g. by a child.

The verification function may include, for example:
using an output device of the smoking substitute device or a mobile device wirelessly connected to the smoking substitute device to produce an output asking the user to verify whether the recognised command should be implemented;
if, in response to the output, the user verifies that they want to implement the recognised command, controlling operation of the smoking substitute device to implement the recognised command.

By way of example, the output may present the recognised command alongside a number of other (alternative) possible commands that may instead be wanted, whilst asking which of these commands is wanted, or alternatively the output could simply ask whether the user wishes to implement the recognised command (without necessarily referring to any other possible commands).

The verification function may include, for example:
using a natural language processing model to generate a sequence of words asking the user to verify whether the recognised command should be implemented;
using an output device of the smoking substitute device or a mobile device wirelessly connected to the smoking substitute device to produce an output which provides the sequence of words to the user;
if, in response to the output, the user verifies that they want to implement the recognised command, controlling operation of the smoking substitute device to implement the recognised command.

The output device may, for example, be the audio interface of the smoking substitute device or an audio interface of a mobile device wirelessly connected to the smoking substitute device, in which case the output asking the user to verify whether the recognised command should be implemented (e.g. in the form of a generated sequence of words) may be provided to the user audibly (e.g. via the audio interface of the smoking substitute device or the audio interface of the mobile device).

The output device may, for example, be a display of the smoking substitute device or a display of a mobile device wirelessly connected to the smoking substitute device, in which case the output asking the user to verify whether the recognised command should be implemented (e.g. in the form of a generated sequence of words) may be provided visually by the display of the smoking substitute device or the display of the mobile device.

The smoking substitute device may be configured to perform a usage feedback function that includes:
using a natural language processing model to generate a sequence of words for providing feedback to a user in relation to their usage of the smoking substitute device;
using an output device of the smoking substitute device or a mobile device wirelessly connected to the smoking substitute device to provide the sequence of words to the user.

The usage feedback function may be performed in response to a user asking a question of their device, in the form of a command expressed in a natural language form (which may be analysed using the natural language processing model, as described above).

In this way, the device can provide feedback in relation to their usage of the smoking substitute device with words expressing that feedback in a natural language form.

For example, in response to a user asking a question in natural language form "what is the connection status?", the device may respond using an output device of the smoking substitute device:
1) You are connected to your WIFI point; or
2) You are connected to your mobile device by Bluetooth.

For example, in response to a user asking a question in natural language form "what is the battery level?", the device may respond using an output device of the smoking substitute device:
1) Your battery is ok for n hours (where n may be determined by a processor in, e.g. a control unit of, the smoking substitute device);
2) You need to put your device on charge (where the determination that the device needs charging may be determined by a processor in, e.g. a control unit of, the smoking substitute device).

The output device may, for example, be the audio interface of the smoking substitute device or an audio interface of a mobile device wirelessly connected to the smoking substitute device, in which case the sequence of words may be provided to the user audibly via the audio interface of the smoking substitute device or the audio interface of the mobile device.

The output device may, for example, be a display of the smoking substitute device or a display of a mobile device wirelessly connected to the smoking substitute device, in which case the sequence of words may be provided visually by the display of the smoking substitute device or the display of the mobile device.

Preferably, the smoking substitute device is configured to prevent the audio signal obtained by the audio interface and/or recognised words spoken by the user (preferably both the audio signal and the recognised words) from being communicated from the device to an external device (such as a mobile device wirelessly connected to the smoking substitute device, or to some other external device).

In this way, potentially sensitive data concerning the user can be kept on the user's smoking substitute device without sending it to an external device, whilst still allowing the user to control their device and/or a mobile device wirelessly connected to the smoking substitute device using natural language. This helps maintain the privacy of the user.

Preferably, the natural language processing model is stored in in one or more natural language processing chips included in the smoking substitute device, e.g. in a single natural language processing chip included in the smoking substitute device.

A natural language processing chip can be understood as a chip which implements a natural language processing model, optionally along with other language processing functions. An example of such a chip is the NLP-5x made by SENSORY^{®}. Other natural language chips are available. For example, chips made by Arm^{®} having DSP capability and compatibility with Arm NN, Arm Compute Library or the CMSIS-NN software library could be used as the natural language processing chip.

The natural language processing model may be stored in one or more processors included in the smoking substitute device, wherein the one or more processors are configured to implement one or more recurrent neural network machine learning algorithms. The one or more processors could include one or more natural language processing chips, but this is not a requirement.

A processor configured to run machine learning algorithms may be considered to be a processor configured to perform one or more operations which constitute well known recurrent neural network machine learning algorithms. An example of such an algorithm is a long short-term memory (LTSM) algorithm. Another example of implementing such an algorithm is the use of a gated recurrent unit (GRU). Both of these examples are well-known to those skilled in the art of machine learning. An example of a class of processing chips suitable to be configured to run recurrent neural network machine learning algorithms is the group of ARM Cortex-A made by Arm Holdings Ltd ARM Cortex-A processors with digital signal processing (DSP) functions can be configured to implement artificial neural networks using the ARM CMSIS NN library (ARM cortex microcontroller software interface standard neural network). A typical implementation of the natural language processing model includes one or more machine learning neural networks, e.g. a series of such networks. This could run on any natural language processing chip, e.g. as described above.

Preferably, the smoking substitute device is configured to perform a voice recognition function in which the smoking substitute device determines whether an audio signal obtained by the audio interface contains speech uttered by a user whose voice has been registered by the smoking substitute device as being valid for use with the smoking substitute device.

Registration of a voice with the smoking substitute device (as being valid for use with the smoking substitute device) may conveniently be performed by a user using the audio interface included in the smoking substitute device, or alternatively using an audio interface of a mobile device (e.g. a laptop) wirelessly connected to the smoking substitute device. For example, registration of a voice may involve prompting a user to use their voice (e.g. using an output device of the smoking substitute device or a display of a mobile device wirelessly connected to the mobile device), obtaining a sample of the user's voice (e.g. using the audio interface of the smoking substitute device or an audio interface of a mobile device wirelessly connected to the smoking substitute device) when the user uses their voice in response to the prompt. In some examples, the registration is a one-time setup sequence including biometric assignment of the user to the device.

The smoking substitute device may be configured to permit control of the smoking substitute device based on an analysis of an audio signal obtained by the audio interface using the natural language processing model, only if the smoking substitute device determines that the audio signal contains speech uttered by a user whose voice has been registered by the smoking substitute device as being valid for use with the smoking substitute device, i.e. only if the smoking substitute device "recognises" the voice as being one registered by the smoking substitute device as being valid for use with the smoking substitute device.

The smoking substitute device may be configured to disable one or more functions of the device, if the smoking substitute device determines that an audio signal obtained by the audio interface does not contain speech uttered by a user whose voice has been registered by the smoking substitute device as being valid for use with the smoking substitute device.

In this way, a user whose voice is not recognised may be prevented from using the device to perform one or more operations. In some examples, this will prevent children from being able to use the device.

The smoking substitute device may be configured to disable one or more functions of the device, if the smoking substitute device determines that an audio signal obtained by the audio interface both (i) does not contain speech uttered by a user whose voice has been registered by the smoking substitute device as being valid for use with the smoking substitute device; and (ii) contains a command (e.g. recognised by the natural language processing model) for controlling operation of the smoking substitute device.

In this way, a user who is attempting to control the device but whose voice is not recognised can be prevented from using the device to perform one or more operations. Whereas a user who is talking in the vicinity of the device but is not attempting to control the device will not cause the smoking substitute device to be disabled.

The smoking substitute device may be configured to disable one or more functions of the device, if a predetermined length of time has elapsed since the smoking substitute device last determined that an audio signal obtained by the audio interface contains speech uttered by a user whose voice has been registered by the smoking substitute device as being valid for use with the smoking substitute device.

In this way, a user whose voice is not recognised may be prevented from using the device, unless the device is returned to a user whose voice is recognised.

The predetermined length of time may be, for example, 1 minute or more, 10 minutes or more, or 1 day or more, depending on implementation requirements. A user may be able to adjust the predetermined length of time, e.g. via a mobile device wirelessly connected to the smoking substitute device.

The one or more functions of the smoking substitute device that could be disabled (in any above-described scenario in which one or more functions of the smoking substitute device is disabled) may include, for example: permitting activation of the smoking substitute device to produce vapour.

In this way, a user would not be able to produce vapour using the device unless/until the one or more functions are re-enabled.

The smoking substitute device may be configured to re-enable one or more previously disabled functions of the smoking substitute device if the smoking substitute device determines that an audio signal obtained by the audio interface contains speech uttered by a user whose voice has been registered by the smoking substitute device as being valid for use with the smoking substitute device.

In this way, the registered user can conveniently re-enable their device. Note that in this context, re-enabling one or more previously disabled functions might not require the user to utter any particular phrase or set of words, so long as a determination is made that the audio signal contains speech uttered by a user whose voice has been registered by the smoking substitute device as being valid for use with the smoking substitute device.

The smoking substitute device may be configured to re-enable one or more previously disabled functions of the smoking substitute device if the smoking substitute device determines that an audio signal obtained by the audio interface both (i) contains speech uttered by a user whose voice has been registered by the smoking substitute device as being valid for use with the smoking substitute device; and (ii) contains a command (e.g. recognised by the natural language processing model) for controlling operation of the smoking substitute device.

This may help to avoid a user accidentally re-enabling their device, e.g. by an un-registered user holding the device near the registered user whilst the registered user happens to be talking.

Preferably, the smoking substitute device includes a natural language processing chip which contains the natural language processing model and is configured to perform a voice recognition function as outlined above.

An example of a chip that is capable of both containing a natural language processing inference model and performing a voice recognition function is the NLP-5x made by SENSORY^{®}. Here we note that the NLP function has dedicated memory within the NLP-5x, but there is also dedicated space available for other applications (e.g. a vape application) which do not interfere with the NLP function.

A second aspect of the invention may provide: A method of controlling a smoking substitute device, wherein the method comprising the smoking substitute device performing a speech control function that includes:
recognising words spoken by a user in an audio signal obtained by the audio interface;
using a natural language processing model to analyse the recognised words spoken by the user; and
controlling an operation of the smoking substitute device based on the analysis of the recognised words spoken by the user.

The method may be performed by a smoking substitute device according to the first aspect of the invention.

Preferably, the smoking substitute device is configured to generate an aerosol from an aerosol forming substrate.

The method may include any method step implementing or corresponding to any apparatus feature described in connection with the first aspect of the invention.

A third aspect of the invention may provide: A computer readable medium comprising a computer readable instructions configured to, when executed, cause a smoking substitute device to perform a method according to the second aspect of the invention.

A fourth aspect of the invention may provide: Electrical circuitry confirmed to perform a speech control function that includes:
recognising words spoken by a user in an audio signal obtained by the audio interface;
using a natural language processing model to analyse the recognised words spoken by the user; and
controlling an operation of the smoking substitute device based on the analysis of the recognised words spoken by the user.

The circuitry may be configured to provide any functionality as described in relation to the first aspect of the invention.

A fifth aspect of the invention may provide a smoking substitute device according to the first aspect of the invention, and an external device (e.g. as described above).

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** shows an example system for managing a smoking substitute device.
**Figure 2(a)** shows an example smoking substitute device for use as the smoking substitute device in the system of Fig. 1.
**Figure 2(b)** shows the main body of the smoking substitute device of Fig. 2(a) without the consumable.
**Figure 2(c)** shows the consumable of the smoking substitute device of Fig. 2(a) without the main body.
**Figure 3(a)** is a schematic view of the main body of the smoking substitute device of Fig. 2(a).
**Figure 3(b)** is a schematic view of the consumable of the smoking substitute device of Fig. 2(a).
**Figure 4** is a flow chart depicting a method by which natural language processing can be implemented to recognise and execute commands given by the user.
**Figure 5** is a flow chart depicting a method by which natural language processing can be implemented to deliver a feedback notification about the usage data of the device to the user.
**Figure 6** is a flow chart depicting a method by which personal data is discarded while relevant command data is issued from the smoking substitute device in the system of Figure 1 to the mobile device in the system of Figure 1.
**Figure 7** is a flow chart depicting a method by which natural language processing can be implemented as a voice recognition unit.
**Figure 8** is a flow chart depicting a method by which natural language processing can be implemented to both function as a voice recognition unit and to recognise and execute commands given by the user.

### Detailed Description of the Invention

A smoking substitute device as described herein may be configured to generate an aerosol from an aerosol forming substrate. The smoking substitute device may be configured to deliver the aerosol to a user for inhalation. For avoidance of any doubt, the smoking substitute device could be either a vaping smoking substitute device, or a heat not burn smoking substitute device (such devices are described in the background section, above). As used herein, the term "aerosol" may include a suspension of aerosol forming substrate, included as one or more of: solid particles; liquid droplets; gas. Said suspension may be in a gas including air. The aerosol may include one or more components of the aerosol forming substrate. As used herein, the term "aerosol forming substrate" (also "aerosol-forming precursor" or "precursor") may refer to one or more of a: liquid; solid; gel; other substance (for which an aerosol is generated). An aerosol generating unit of the smoking substitute device may be configured to process the aerosol forming substrate to form an aerosol as defined herein. The term "aerosol" herein may be used interchangeably with the term "vapour"

Aspects and embodiments of the present invention will now be discussed with reference to the accompanying figures. Further aspects and embodiments will be apparent to those skilled in the art. All documents mentioned in this text are incorporated herein by reference.

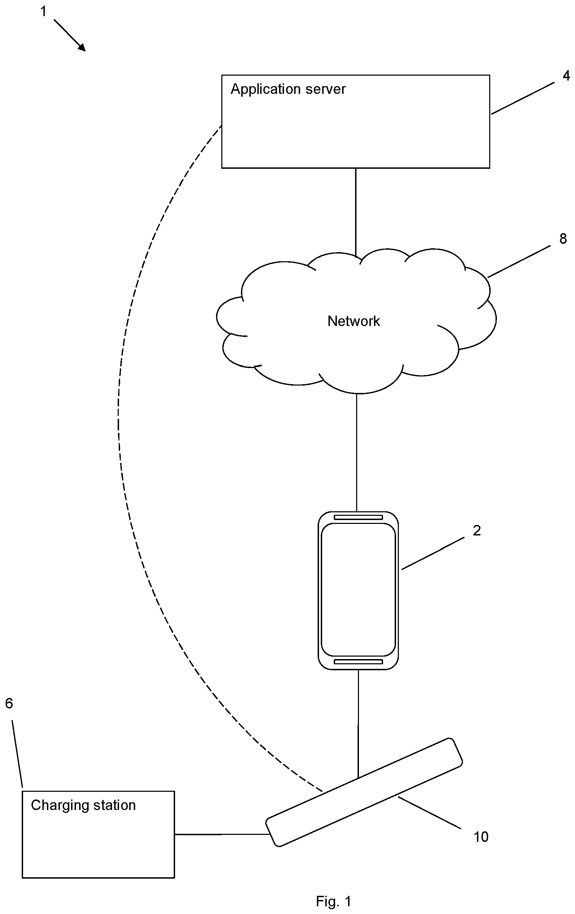

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth^{™} with an application (or "app") installed on the mobile device 2, e.g. via a suitable wireless interface (not shown) on the mobile device 2. The mobile device 2 may be a mobile phone, for example. The application on the mobile phone is configured to communicate with the application server 4, via a network 8. The application server 4 may utilise cloud storage, for example.

The network 8 may include a cellular network, low-power wide-area network (LWPAN) wireless Internet of Things (IoT) technology, and/or the internet.

In other examples, the smoking substitute device 10 may be configured to communicate with the application server 4 via a connection that does not involve the mobile device 2, e.g. via a narrowband internet of things ("NB-loT") connection. In some examples, the mobile device 2 may be omitted from the system.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

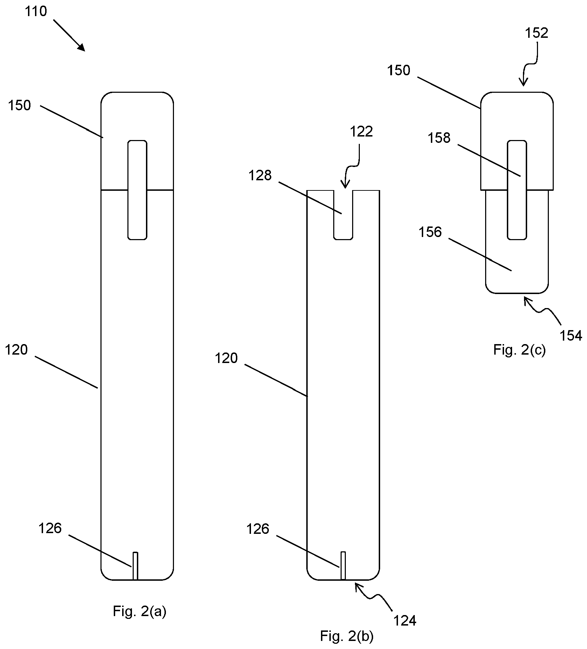

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120, e.g. with the consumable 150 being retained in the aperture via an interference fit. In other examples, the main body 120 and the consumable could be physically coupled together by screwing one onto the other, through a bayonet fitting, or through a snap engagement mechanism, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

In this present embodiment, the consumable 302 is a "single-use" consumable. That is, upon exhausting the e-liquid in the tank 156, the intention is that the user disposes of the whole consumable 150. In other embodiments, the e-liquid (i.e. aerosol former) may be the only part of the system that is truly "single-use". In such embodiments, the tank 156 may be refillable with e-liquid or the e-liquid may be stored in a non-consumable component of the system. For example, the e-liquid may be stored in a tank located in the device or stored in another component that is itself not single-use (e.g. a refillable tank).

The tank 156 may be referred to as a "clearomizer" if it includes a window 158, or a "cartomizer" if it does not.

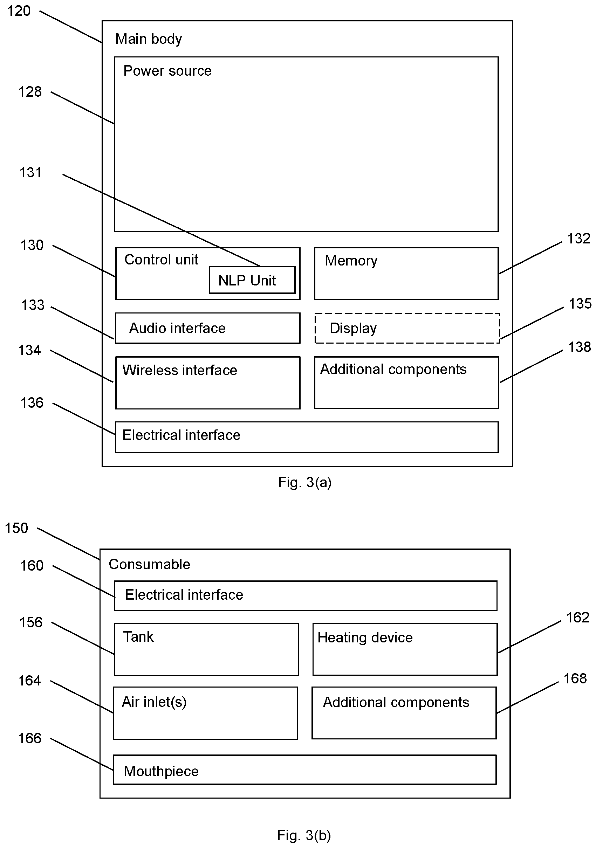

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, an audio interface 133, a wireless interface 134, optionally a display 135, an electrical interface 136, and, optionally, one or more additional components 138.

The power source 128 is preferably a battery, more preferably a rechargeable battery.

The control unit 130 may include a microprocessor, for example.

The control unit 130 includes an NLP unit 131. The NLP unit may be a natural language processing chip, for example.

The memory 132 is preferably includes non-volatile memory.

The audio interface 133 may include a microphone and, optionally, a loudspeaker.

The wireless interface 134 is preferably configured to communicate wirelessly with the mobile device 2, e.g. via Bluetooth. To this end, the wireless interface 134 could include a Bluetooth^{™} antenna. Other wireless communication interfaces, e.g. WiFi, are also possible.

The display 135, if included, may, for example, be a screen.

The electrical interface 136 of the main body 120 may include one or more electrical supply contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 of the main body 120 may include a reading device configured to read information associated with the consumable from a machine readable data source included in (e.g. contained in the body of, or attached to) the consumable 150.

In some examples, the reading device (if present) may be configured to read information from the machine readable data source non-wirelessly, e.g. using an electrical connection between the main body 120 and consumable 150.

For example, the reading device (if present) may include a set of one or more electrical communication contacts configured to read information from the machine readable data source via an electrical connection established between the set of one or more electrical communication contacts and the machine readable data source. Conveniently, the set of one or more electrical communication contacts of the reading device may be configured to provide the electrical connection by engaging with a set of one or more electrical communication contacts of the consumable 150, when the main body 120 and the consumable 150 are physically coupled together.

In some examples, the reading device (if present) may be configured to read information from the machine readable data source wirelessly, e.g. via electromagnetic waves or optically. Thus, for example, the machine readable data source included in the consumable 150 could be an RFID tag (in which case the reading device included in the main body 120 may be an RFID reader) or a visual data source such as a barcode (in which case the reading device included in the main body may be an optical reader, e.g. a barcode scanner). Various wireless technologies and protocols may be employed to allow the reading device to wirelessly read information from a machine readable data source included in or attached to the consumable 150, e.g. NFC, Bluetooth, Wi-Fi, as would be appreciated by a skilled person.

The reading device (if present) may be configured to write information associated with the consumable to the machine readable data source (e.g. wirelessly or non-wirelessly, via one of the mechanisms discussed above) in addition to being configured to read information associated with the consumable from the machine readable data source. In this case, the reading device may be referred to as a reading/writing device.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical supply contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include a machine readable data source, which may e.g. be contained in the body of, or attached to the consumable 150. The machine readable data source may store information associated with the consumable. The information associated with the consumable may include information concerning the content of the consumable (e.g. e-liquid type, batch number) and/or a unique identifier, for example.

The machine readable data source may be rewritable, e.g. a rewritable RFID chip, or read only, e.g. a visual data source such as a barcode. As indicated above, the additional components 138 of the main body 120 may include a reading device configured to read information associated with the consumable from the machine readable data source.

For example, the electrical interface 160 of the consumable 150 may include a set of one or more electrical communication contacts, which may allow a reading device of the main body to read information from a machine readable data source of the consumable, e.g. as discussed previously.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS^{™} smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO^{™} e-cigarette discussed above.

As another example, an entirely disposable (one use) smoking substitute device could be used as the smoking substitute device 10 of Fig. 1, instead of the smoking substitute device 110.

In some embodiments, the NLP unit 131 is a natural language processing chip. A natural language processing chip is a chip which implements a natural language processing model. A natural language processing chip may also perform additional language processing functions.

In some examples the natural language processing chip could be the NLP-5x made by SENSORY^{®}. The NLP-5x is capable of supporting both hidden Markov modelling as well as neural networks, both of which are algorithms well known to those skilled in the art of natural language processing. The NLP-5x is also configurable to implement biometric voice verification. This allows an NLP-5x chip to additionally be used for voice recognition, e.g. as described in more detail below.

In some embodiments, the natural language processing chip is configured to implement one or more recurrent neural network machine learning algorithms.

In some examples, the recurrent neural network machine learning algorithms include long short-term memory (LSTM) algorithms.

In some examples, the one or more recurrent neural network machine learning algorithms include gated recurrent units (GRUs).

In some examples the one or more recurrent neural network machine learning algorithms are implemented by using TensorFlow^{™} machine learning networks. The skilled person will be aware that many other machine learning frameworks are appropriate for implementing recurrent neural networks.

The one or more recurrent neural network machine learning algorithms could be implemented using standard, freely available software, e.g. by implementing one or more of the SciPy, NumPy, Matplotlib, pandas, and scikit-learn (sklearn) libraries of the Python^{®} programming language. Additionally or alternatively, the one or more recurrent neural network machine learning algorithms could be implemented using proprietary licensed software, e.g. MATLAB^{®}.

In some examples, the inference outputs of the one or more recurrent neural network machine learning algorithms are optimised by implementing one or more sparse-matrix operations. The one or more sparse-matrix operations may include implementation of well-known sparse-matrix libriaries, e.g. the NVIDIA CUDA^{®} Sparse Matrix library^{™} - cuSPARSE.

The one or more recurrent neural network machine learning algorithms are preferably built and trained on a separate system to the smoking substitute device 10, not shown in the figures. Preferably the separate system is an external graphics processing unit (GPU).

In some examples, the recurrent neural network machine learning algorithms are implemented on one or more processing chips suitable to run recurrent neural network machine learning algorithms, e.g. the ARM Cortex-A processors made by Arm Holdings Ltd. Other chips made by Arm^{®}, e.g. having DSP capability, and compatibility with Arm NN, Arm Compute Library or the CMSIS-NN software library could be equally be used. For avoidance of any doubt, these are just examples, and other chips (not necessarily made by Arm^{®}) could also be used.

In some examples, implementing the natural language processing model includes retraining freely available pre-trained natural language processing models on an external workstation. In some examples, the pre-trained natural language processing models may include one or more of: Universal Language Model Fine-tuning (ULMFiT), a generative pre-trained transformer (GPT), embedding-from-language models (ELMo's), and bidirectional encoder representations from transformers (BERT). In some examples, the external workstation is a graphics processing unit (GPU). In some examples, the training data required to implement the re-training is based on usage data of a plurality of users. In some examples, the plurality of users includes 1000 users or more, 2000 users or more, 5000 users or more, or more preferably 7000 users or more. Alternatively, the pre-trained natural language processing models may be implemented without retraining them via machine learning algorithms, In some examples, where the pre-trained natural language processing models are not retrained, a text classifier module may be included in the natural language processing model to classify the recognised text according to one or more predetermined categories of spoken language.

A skilled person could readily implement the natural language processing and machine learning as described herein in light of the present disclosure as well as known natural language processing and machine learning techniques, which are well described in the literature.

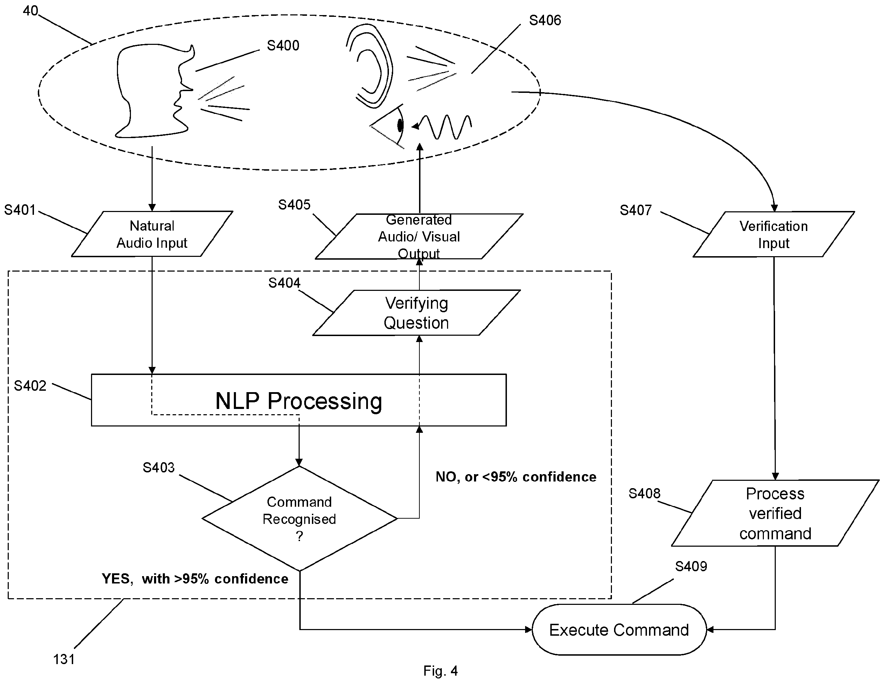

Fig. 4 is a flow chart depicting a method by which natural language processing can be implemented to recognise and execute commands given by the user.

As depicted in Fig. 4, a user 40 of the smoking substitute device 10 issues a command in naturally spoken words S400. It is anticipated that different users of the device will use different naturally spoken words to convey the same intended meaning.

The naturally spoken words S400 are received by the audio interface 133 of the smoking substitute device and transmitted to the NLP unit 131 of the device as natural audio input in step S401. The NLP unit 131 on the control unit 130 of the smoking substitute device 10 contains an NLP model which is used to perform natural language processing (NLP) S402 on the natural audio input. The results of the natural language processing, e.g. a possible command, may then be compared to a predetermined list of possible commands in step S403.

In some examples, the command recognised by the natural language processing model may be accompanied by an associated confidence level, indicating a level of confidence that the command has been correctly recognised. The confidence level would typically be produced by the natural language model itself. The/each confidence is preferably expressed as a probability, e.g. with 0.8 indicating a 80% probability that the command has been correctly recognised.

In some examples, the model may analyse the recognised words spoken by the user and assign a respective confidence level to each of a number of possible commands, with the confidence level indicating that the recognised words contain that possible command. The possible command with the highest associated confidence level may then be designated as a recognised command expressed in a natural language form, with the confidence level associated with said possible command being the confidence level associated with the recognised command.

If a confidence level associated with the recognised command is greater than or equal to a predetermined threshold, the NLP unit 131 notifies the control unit 130 of the recognised command the user 40 intends to be executed. The control unit 130 subsequently executes this command S409.

If the confidence level associated with the recognised command is below the predetermined threshold (or indeed if the NLP unit cannot determine the command that the user 40 intends to be executed by the smoking substitute device 10), the NLP unit may perform a verification function to verify the command intended to be executed by the user, e.g. in the form of an output asking the user to verify whether a recognised command should be implemented, or asking which of a plurality of possible commands should be implemented. In this example, the verification function involves natural language processing S402 (using the NLP model) to generate a verifying question S404 in natural language.

Although in this example, natural language processing S402 is used to generate the verifying question S404, in other examples it would be possible for the verifying question to be generated by other means, e.g. the control unit 130 could be configured to instruct the audio interface 133 to emit an audible signal indicative of the need for verification of a recognised command. Additionally or alternatively the display 135 could be configured to display visual information indicative of the need for verification, e.g. "Do you want to perform the following function: pair the device".

The generated verifying question S404 is delivered to the user using one or more output devices. The one or more output devices may, for example, include the audio interface 133 of the smoking substitute device 10. Additionally or alternatively, the one or more output devices may include an audio interface of the remote device 2 wirelessly connected to the smoking substitute device 10. In this way, the generated verifying question S404 may be configured as a generated audio output S405 and delivered to the user audibly S406.

Additionally or alternatively, the one or more output devices may include the display 135 of the smoking substitute device 10. Additionally or alternatively, the one or more output devices may include a display of the remote device 2 wirelessly connected to the smoking substitute device 10. In this way, the generated verifying question S404 may be configured as a generated visual output S405 and delivered to the user visually S406.

Additionally or alternatively, the one or more output devices may include a haptic feedback unit of the smoking substitute device 10. The haptic feedback unit may be configured to vibrate to alert the user 40 that there is a generated audio/visual output S405 corresponding to the generated verifying question S404. Preferably the haptic feedback corresponding to the alert of a verifying question is uniquely distinguishable from any other haptic feedback that the smoking substitute device is configured to deliver, thereby indicating the command that is to be verified.

The user 40 then provides verification input to the device S407 to verify the command that the user intends the smoking substitute device 10 to execute. The verification input may be, for example, words spoken in natural language, but it is not necessary for the verification input to be processed with natural language processing. For example, the verification input may be an input through a touchscreen display on the smoking substitute device 10 or the remote device 2 which communicates the input wirelessly to the smoking substitute device. As another example, the verification input may be through mechanical means, e.g. a button or actuator.

The smoking substitute device processes the verified command S408. If the verification input is in the form of words spoken in natural language, the verified command may be processed with natural language processing, similar to in step S402.

Once the verified command has been processed by the smoking substitute device 10, the device implements (or "executes") the verified command S409.

The predetermined confidence level threshold may be, e.g. 80% or higher, 90% or higher, or more preferably 95% or higher.

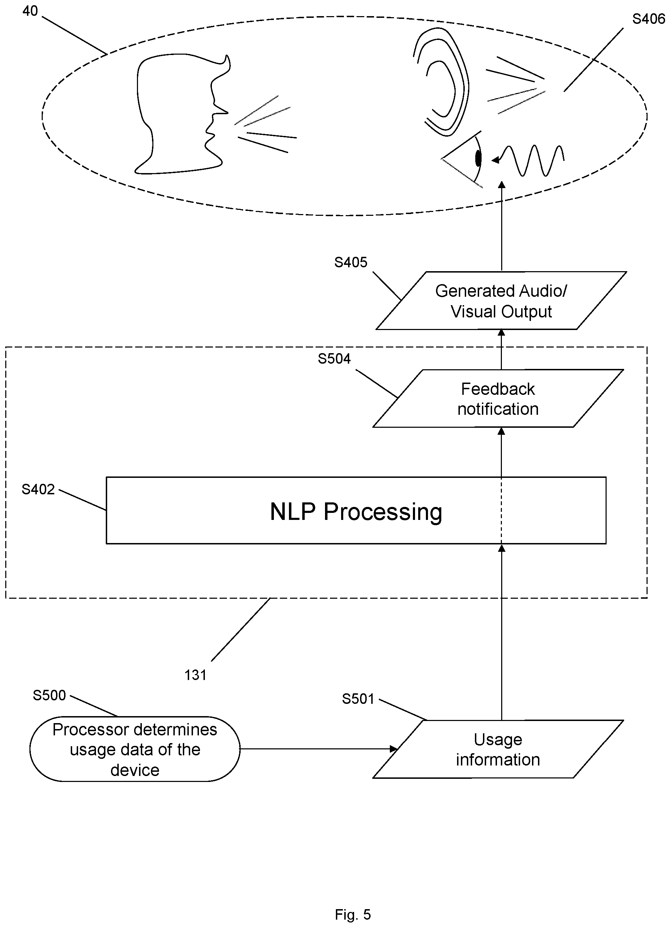

Figure 5 is a flow chart depicting a method by which natural language processing can be implemented to deliver a feedback notification about the usage date of the device to the user.

As depicted in Figure 5, one or more processors on the control unit 130 of the smoking substitute device 10 determine one or more parameters associated with the usage data of the device S500. The one or more parameters associated with the usage data of the device may include e.g. the number of activation events of the device in a predetermined period of time, the predicted time of a next activation event, the predicted time a next empty battery event, the predicted time of a next empty consumable event.

The one or more parameters associated with the usage data of the device are encoded as usage information S501. The NLP unit 131 of the smoking substitute device implements natural language processing S402 using a natural language processing model to generate a feedback notification in natural language S504.

The generated feedback notification S504 is delivered to the user using one or more output devices. The one or more output devices may, for example, include the audio interface 133 of the smoking substitute device 10. Additionally or alternatively, the one or more output devices may include an audio interface of the remote device 2 wirelessly connected to the smoking substitute device 10. In this way, the generated feedback notification S504 may be configured as a generated audio output S405 and delivered to the user audibly S406.

Additionally or alternatively, the one or more output devices may include the display 135 of the smoking substitute device 10. Additionally or alternatively, the one or more output devices may include a display of the remote device 2 wirelessly connected to the smoking substitute device 10. In this way, the generated feedback notification S504 may be configured as a generated visual output S405 and delivered to the user visually S406.

Additionally or alternatively, the one or more output devices may include a haptic feedback unit of the smoking substitute device 10. The haptic feedback unit may be configured to vibrate to alert the user 40 that there is a generated audio/visual output S405 corresponding to the generated feedback notification S504. Preferably the haptic feedback corresponding to the alert of a feedback notification is uniquely distinguishable from any other haptic feedback that the smoking substitute device is configured to deliver.

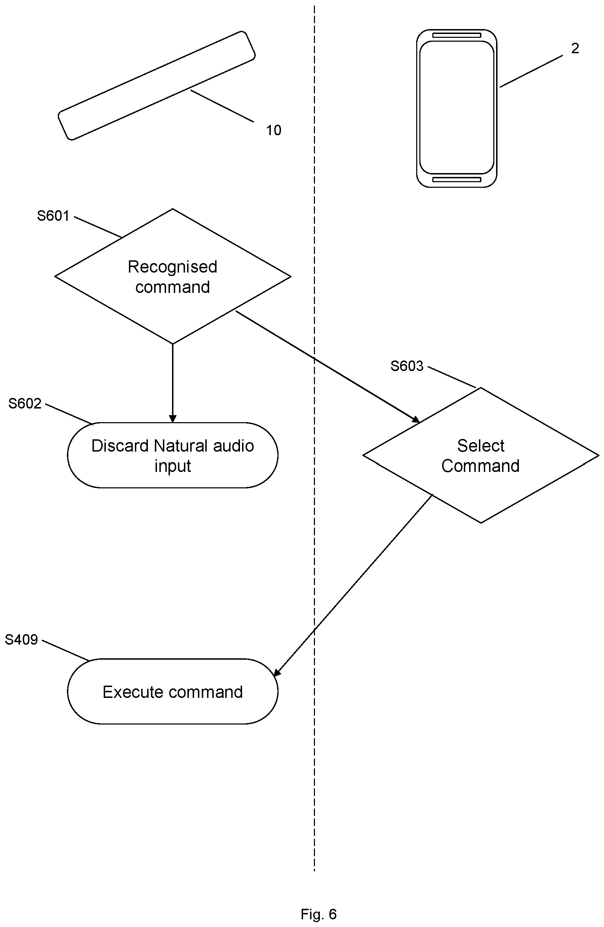

Figure 6 is a flow chart depicting a method by which personal data is discarded while relevant command data is issued from the smoking substitute device in the system of Figure 1 to the mobile device in the system of Figure 1.

In some embodiments of the present invention, the NLP unit 131 may be configured to transmit the recognised command intended by the user 40 of the device to the remote device 2 wirelessly connected to the smoking substitute device in step S601. The remote device 2 selects the appropriate command to be executed S603 and transmits an instruction to execute the selected command to the smoking substitute device 10 in step S409.

In these cases, to prevent a security breach of personal data, the natural audio input S401, preferably also the recognised words spoken by a user in that audio signal, is permanently discarded in step S602.

Only the recognised command is transmitted to the mobile device 2, i.e. the NLP unit 131 is configured to prohibit natural audio input and/or other personal data from leaving the smoking substitute device 10.

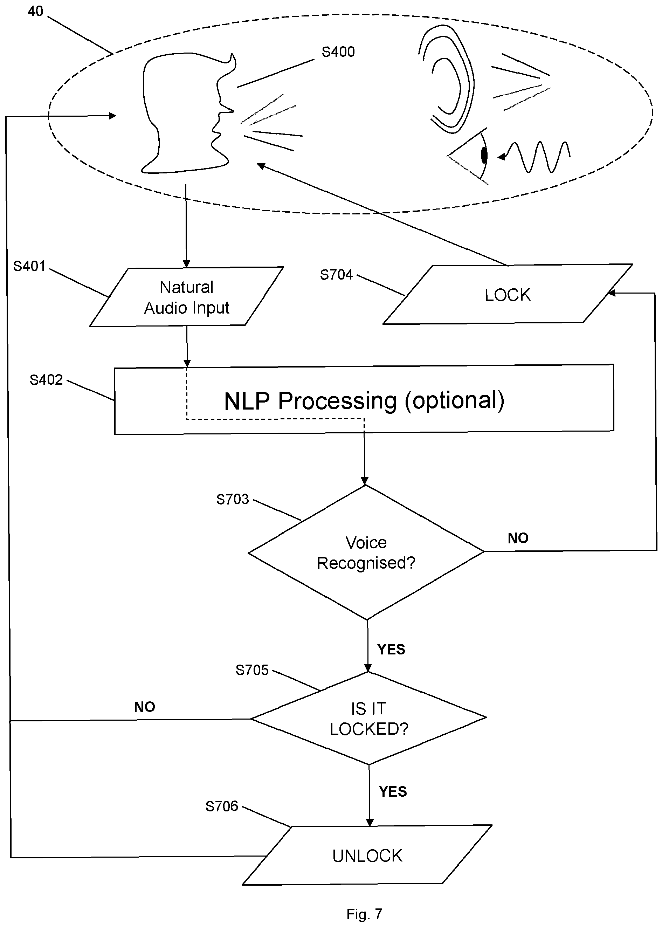

Figure 7 is a flow chart depicting a method by which natural language processing can be implemented as a voice recognition unit.

As depicted in Figure 7, the user 40 of the smoking substitute device 10 speaks in naturally spoken words S400. It is anticipated that different users of the device will use different naturally spoken words to convey the same intended meaning.

The naturally spoken words S400 are received by the audio interface 133 of the smoking substitute device and are optionally transmitted to the NLP unit 131 of the device as natural audio input in step S401. The NLP unit 131 on the control unit 130 of the smoking substitute device 10 performs natural language processing (NLP) S402 on the natural audio input. If the natural audio input has been transferred to the NLP unit 131 for natural language processing, it is subsequently transmitted to a voice recognition unit which determines if the detected voice belongs to a user 40 whose voice has been registered with the smoking substitute device S703. In some examples, the NLP unit 131 also acts as the voice recognition unit. The natural audio input may be transmitted directly to the voice recognition unit without first being transmitted to the NLP unit 131.

Registration of a voice with the smoking substitute device may conveniently be performed by a user using the audio interface included in the smoking substitute device, or alternatively using an audio interface of a mobile device wirelessly connected to the smoking substitute device. This registration process may involve prompting a user to use their voice, e.g. using an output device of the smoking substitute device or a display of a mobile device wirelessly connected to the mobile device.

If the voice recognition determines that the voice of the user 40 does not correspond to the voice of a registered user of the device in step S703, the smoking substitute device 10 may be configured to disable one or more functions of the device S704.

Additionally or alternatively, the smoking substitute device may be configured to disable one or more functions of the device only if an audio signal obtained by the audio interface 133 both (i) does not contain speech uttered by a registered user; and (ii) contains a command (e.g. recognised by the natural language processing model) for controlling operation of the smoking substitute device.

Additionally or alternatively, the smoking substitute device 10 may be configured to disable one or more function of the device if a predetermined length of time has elapsed since the smoking substitute device last determined in step S703 that an audio signal obtained by the audio interface 133 of the smoking substitute device 10 contains speech uttered by a user whose voice has been registered by the smoking substitute device 10 as being valid for use with the smoking substitute device.

The predetermined length of time may be, for example, 10 seconds or more, 30 seconds or more, 1 minute or more, 90 seconds or more, or 2 minutes or more depending on need. A registered user may be able to adjust the predetermined length of time, e.g. via the remote device 2 wirelessly connected to the smoking substitute device 10. Additionally or alternatively, the predetermined length of time could be determined by the device itself by implementing an algorithm accounts for the frequency of usage of the device. In some examples, this algorithm is a machine learning algorithm.

If the voice recognition unit determines that the voice of the user 40 corresponds to the voice of a registered user of the device in step S703, the smoking substitute device 10 may be configured to check if one or more functions of the device S705. If one or more functions of the smoking substitute device have been disabled, then the device may be configured to re-enable the one or more disabled functions of the device S706.

Additionally or alternatively, the smoking substitute device may be configured to re-enable one or more previously disabled functions of the smoking substitute device if the smoking substitute device determines that an audio signal obtained by the audio interface both (i) contains speech uttered by a registered user; and (ii) contains a command (e.g. recognised by the natural language processing model) for controlling operation of the smoking substitute device.

The one or more functions of the smoking substitute device 10 that could be disabled may include, for example permitting activation of the smoking substitute device to produce vapour The one or more functions of the smoking substitute device 10 that could be disabled may include, for example wirelessly pairing the smoking substitute device with a new mobile device.

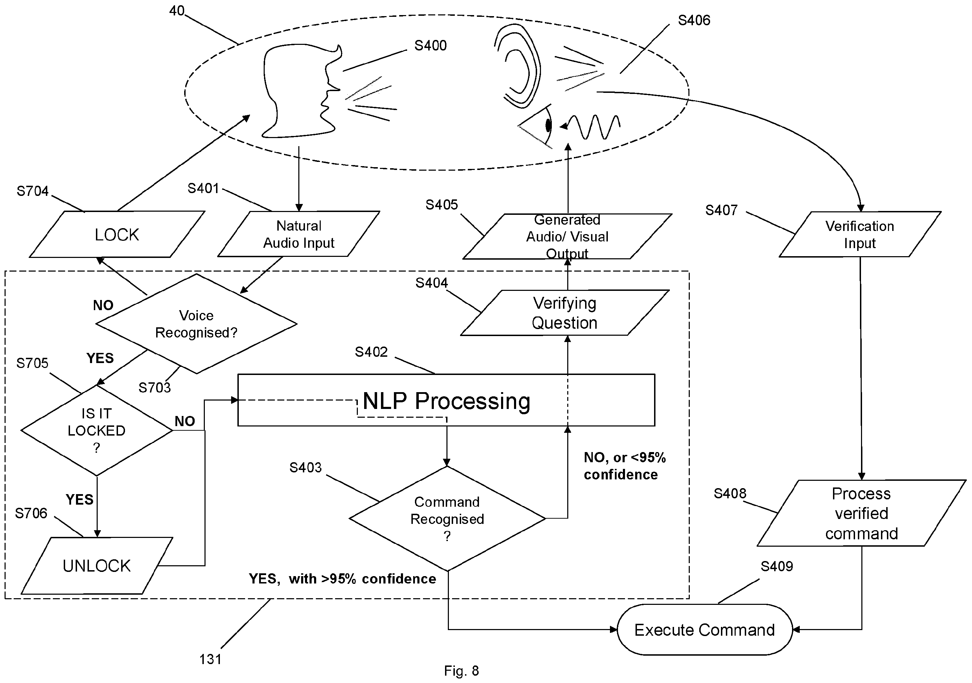

Figure 8 is a flow chart depicting a method by which natural language processing can be implemented to both function as a voice recognition unit and to recognise and execute commands given by the user.

As depicted in Figure 8, the NLP unit 131 is configured to implement both one or more voice recognition algorithms S703, and natural language processing to recognise commands S403 uttered by a registered user of the device, as described previously with respect to previous Figs. 4 and 7. Since these steps have already been described, the description of these steps does not need to be repeated here.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

The following statements, which are not statements, provide general expressions of the disclosure herein:
A1. A smoking substitute device configured to generate an aerosol from an aerosol forming substrate, the device comprising an audio interface; wherein the smoking substitute device is configured to perform a speech control function that includes: recognising words spoken by a user in an audio signal obtained by the audio interface; using a natural language processing model to analyse the recognised words spoken by the user; and controlling an operation of the smoking substitute device based on the analysis of the recognised words spoken by the user.
A2. A smoking substitute device according to statement 1 or 2, wherein the speech control function includes: using a natural language processing model to analyse the recognised words spoken by the user and to recognise a command expressed in a natural language form within the recognised words; and controlling operation of the smoking substitute device based on the analysis of the recognised words spoken by the user to implement the recognised command.
A3. A smoking substitute device according to any preceding statement, wherein the smoking substitute device is configured to, if a confidence level associated with a command recognised by the natural language processing model is less than a predetermined threshold value, perform a verification function to verify the command intended to be executed by the user.
A4. A smoking substitute device according to statement 3, wherein the verification function includes: using an output device of the smoking substitute device or a mobile device wirelessly connected to the smoking substitute device to produce an output asking the user to verify whether the recognised command should be implemented; and if, in response to the output, the user verifies that they want to implement the recognised command, controlling operation of the smoking substitute device to implement the recognised command.
A5. A smoking substitute device according to statement 3 or 4, wherein the verification function further includes: using a natural language processing model to generate a sequence of words asking the user to verify whether the recognised command should be implemented; using an output device of the smoking substitute device or a mobile device wirelessly connected to the smoking substitute device to produce an output which provides the sequence of words to the user; and if, in response to the output, the user verifies that they want to implement the recognised command, controlling operation of the smoking substitute device to implement the recognised command.
A6. A smoking substitute device according to any preceding statement, wherein the smoking substitute device is configured to perform a usage feedback function that includes: using a natural language processing model to generate a sequence of words for providing feedback to a user in relation to their usage of the smoking substitute device; and using an output device of the smoking substitute device or a mobile device wirelessly connected to the smoking substitute device to provide the sequence of words to the user.
A7. A smoking substitute device according to any preceding statement, wherein the smoking substitute device is configured to prevent the audio signal obtained by the audio interface and/or recognised words spoken by the user from being communicated from the device to an external device.
A8. A smoking substitute device according to any preceding statement, wherein the natural language processing model is stored in one or more natural language processing chips included in the smoking substitute device.
A9. A smoking substitute device according to any preceding statement, wherein the natural language processing model is stored in one or more processors included in the smoking substitute device, wherein the one or more processors are configured to implement one or more recurrent neural network machine learning algorithms.
A10. A smoking substitute device according to any preceding statement, wherein the smoking substitute device is configured to perform a voice recognition function in which the smoking substitute device determines whether an audio signal obtained by the audio interface contains speech uttered by a user whose voice has been registered by the smoking substitute device as being valid for use with the smoking substitute device.
A11. A smoking substitute device according to statement 10, wherein the smoking substitute device is configured to permit control of the smoking substitute device based on an analysis of an audio signal obtained by the audio interface using the natural language processing model, only if the smoking substitute device determines that the audio signal contains speech uttered by a user whose voice has been registered by the smoking substitute device as being valid for use with the smoking substitute device.
A12. A smoking substitute device according to either of statements 10 or 11, wherein the smoking substitute device is configured to disable one or more functions of the device if the smoking substitute device determines that an audio signal obtained by the audio interface does not contain speech uttered by a user whose voice has been registered by the smoking substitute device as being valid for use with the smoking substitute device.
A13. A smoking substitute device according to any of statements 10 to 12, wherein the smoking substitute device is configured to disable one or more functions of the device, if the smoking substitute device determines that an audio signal obtained by the audio interface both (i) does not contain speech uttered by a user whose voice has been registered by the smoking substitute device as being valid for use with the smoking substitute device; and (ii) contains a command for controlling operation of the smoking substitute device.
A14. A smoking substitute device according to any of statements 10 to 13, wherein the smoking substitute device is configured to disable one or more functions of the device, if a predetermined length of time has elapsed since the smoking substitute device last determined that an audio signal obtained by the audio interface contains speech uttered by a user whose voice has been registered by the smoking substitute device as being valid for use with the smoking substitute device.
A15. A smoking substitute device according to any of statements 12 to 14, wherein the one or more functions of the smoking substitute device that could be disabled includes: permitting activation of the smoking substitute device to produce vapour.
A16. A smoking substitute device according to any of statements 12 to 15, wherein the smoking substitute device is configured to re-enable one or more previously disabled functions of the smoking substitute device if the smoking substitute device determines that an audio signal obtained by the audio interface contains speech uttered by a user whose voice has been registered by the smoking substitute device as being valid for use with the smoking substitute device.
A17. A smoking substitute device according to any of statements 12 to 16, wherein the smoking substitute device is configured to re-enable one or more previously disabled functions of the smoking substitute device if the smoking substitute device determines that an audio signal obtained by the audio interface both (i) contains speech uttered by a user whose voice has been registered by the smoking substitute device as being valid for use with the smoking substitute device; and (ii) contains a command for controlling operation of the smoking substitute device.
A18. A smoking substitute device according to any of statements 10 to 17, wherein the smoking substitute device includes a natural language processing chip which contains the natural language processing model and is configured to perform the voice recognition function.
A19. A method of controlling a smoking substitute device, wherein the method comprising the smoking substitute device performing a speech control function that includes: recognising words spoken by a user in an audio signal obtained by the audio interface; using a natural language processing model to analyse the recognised words spoken by the user; and controlling an operation of the smoking substitute device based on the analysis of the recognised words spoken by the user.
A20. A computer readable medium comprising a computer readable instructions configured to, when executed, cause a smoking substitute device to perform a method of controlling a smoking substitute device, wherein the method comprising the smoking substitute device performing a speech control function that includes: recognising words spoken by a user in an audio signal obtained by the audio interface; using a natural language processing model to analyse the recognised words spoken by the user; and controlling an operation of the smoking substitute device based on the analysis of the recognised words spoken by the user.
A21. Electrical circuitry confirmed to perform a speech control function that includes: recognising words spoken by a user in an audio signal obtained by the audio interface; using a natural language processing model to analyse the recognised words spoken by the user; and controlling an operation of the smoking substitute device based on the analysis of the recognised words spoken by the user.
B1. A smoking substitute device configured to generate an aerosol from an aerosol forming substrate, the device comprising an audio interface;
   wherein the smoking substitute device is configured to perform a speech control function that includes:
   recognising words spoken by a user in an audio signal obtained by the audio interface;
   using a natural language processing model to analyse the recognised words spoken by the user; and
   controlling an operation of the smoking substitute device based on the analysis of the recognised words spoken by the user.
B2. A smoking substitute device according to statement B1, wherein the speech control function includes:
   using a natural language processing model to analyse the recognised words spoken by the user and to recognise a command expressed in a natural language form within the recognised words; and
   controlling operation of the smoking substitute device based on the analysis of the recognised words spoken by the user to implement the recognised command.
B3. A smoking substitute device according to any preceding statement, wherein the smoking substitute device is configured to, if a confidence level associated with a command recognised by the natural language processing model is less than a predetermined threshold value, perform a verification function to verify the command intended to be executed by the user.
B4. A smoking substitute device according to statement B3, wherein the verification function includes:
   using an output device of the smoking substitute device or a mobile device wirelessly connected to the smoking substitute device to produce an output asking the user to verify whether the recognised command should be implemented; and
   if, in response to the output, the user verifies that they want to implement the recognised command, controlling operation of the smoking substitute device to implement the recognised command.
B5. A smoking substitute device according to statement B3 or B4, wherein the verification function further includes:
   using a natural language processing model to generate a sequence of words asking the user to verify whether the recognised command should be implemented;
   using an output device of the smoking substitute device or a mobile device wirelessly connected to the smoking substitute device to produce an output which provides the sequence of words to the user; and
   if, in response to the output, the user verifies that they want to implement the recognised command, controlling operation of the smoking substitute device to implement the recognised command.
B6. A smoking substitute device according to any preceding statement, wherein the smoking substitute device is configured to perform a usage feedback function that includes:
   using a natural language processing model to generate a sequence of words for providing feedback to a user in relation to their usage of the smoking substitute device; and
   using an output device of the smoking substitute device or a mobile device wirelessly connected to the smoking substitute device to provide the sequence of words to the user.
B7. A smoking substitute device according to any preceding statement, wherein the smoking substitute device is configured to prevent the audio signal obtained by the audio interface and/or recognised words spoken by the user from being communicated from the device to an external device.
B8. A smoking substitute device according to any preceding statement, wherein:
   the natural language processing model is stored in one or more natural language processing chips included in the smoking substitute device; and/or
   the natural language processing model is stored in one or more processors included in the smoking substitute device, wherein the one or more processors are configured to implement one or more recurrent neural network machine learning algorithms.
B9. A smoking substitute device according to any preceding statement, wherein the smoking substitute device is configured to perform a voice recognition function in which the smoking substitute device determines whether an audio signal obtained by the audio interface contains speech uttered by a user whose voice has been registered by the smoking substitute device as being valid for use with the smoking substitute device.
B10. A smoking substitute device according to statement B9, wherein the smoking substitute device is configured to permit control of the smoking substitute device based on an analysis of an audio signal obtained by the audio interface using the natural language processing model, only if the smoking substitute device determines that the audio signal contains speech uttered by a user whose voice has been registered by the smoking substitute device as being valid for use with the smoking substitute device.
B11. A smoking substitute device according to statement B9 or B10, wherein:
   the smoking substitute device is configured to disable one or more functions of the device if the smoking substitute device determines that an audio signal obtained by the audio interface does not contain speech uttered by a user whose voice has been registered by the smoking substitute device as being valid for use with the smoking substitute device; and/or
   the smoking substitute device is configured to disable one or more functions of the device, if the smoking substitute device determines that an audio signal obtained by the audio interface both (i) does not contain speech uttered by a user whose voice has been registered by the smoking substitute device as being valid for use with the smoking substitute device; and (ii) contains a command for controlling operation of the smoking substitute device; and/or
   the smoking substitute device is configured to disable one or more functions of the device, if a predetermined length of time has elapsed since the smoking substitute device last determined that an audio signal obtained by the audio interface contains speech uttered by a user whose voice has been registered by the smoking substitute device as being valid for use with the smoking substitute device.
B12. A smoking substitute device according to statement B11, wherein:
   the smoking substitute device is configured to re-enable one or more previously disabled functions of the smoking substitute device if the smoking substitute device determines that an audio signal obtained by the audio interface contains speech uttered by a user whose voice has been registered by the smoking substitute device as being valid for use with the smoking substitute device; and/or
   the smoking substitute device is configured to re-enable one or more previously disabled functions of the smoking substitute device if the smoking substitute device determines that an audio signal obtained by the audio interface both (i) contains speech uttered by a user whose voice has been registered by the smoking substitute device as being valid for use with the smoking substitute device; and (ii) contains a command for controlling operation of the smoking substitute device; and/or
B13. A smoking substitute device according to any of statements B9 to B12, wherein the smoking substitute device includes a natural language processing chip which contains the natural language processing model and is configured to perform the voice recognition function.
B14. A method of controlling a smoking substitute device, wherein the method comprising the smoking substitute device performing a speech control function that includes:
   recognising words spoken by a user in an audio signal obtained by the audio interface;
   using a natural language processing model to analyse the recognised words spoken by the user; and
   controlling an operation of the smoking substitute device based on the analysis of the recognised words spoken by the user.
B15. A computer readable medium comprising a computer readable instructions configured to, when executed, cause a smoking substitute device to perform a method of controlling a smoking substitute device, wherein the method comprising the smoking substitute device performing a speech control function that includes:
   recognising words spoken by a user in an audio signal obtained by the audio interface;
   using a natural language processing model to analyse the recognised words spoken by the user; and
   controlling an operation of the smoking substitute device based on the analysis of the recognised words spoken by the user.

## Claims

1. A smoking substitute device configured to generate an aerosol from an aerosol forming substrate, the device comprising an audio interface;
wherein the smoking substitute device is configured to perform a speech control function that includes:
recognising words spoken by a user in an audio signal obtained by the audio interface;
using a natural language processing model to analyse the recognised words spoken by the user; and
controlling an operation of the smoking substitute device based on the analysis of the recognised words spoken by the user;
wherein the smoking substitute device is configured to perform a voice recognition function in which the smoking substitute device determines whether an audio signal obtained by the audio interface contains speech uttered by a user whose voice has been registered by the smoking substitute device as being valid for use with the smoking substitute device;
wherein the smoking substitute device is configured to disable one or more functions of the device, if a predetermined length of time has elapsed since the smoking substitute device last determined that an audio signal obtained by the audio interface contains speech uttered by a user whose voice has been registered by the smoking substitute device as being valid for use with the smoking substitute device.

2. A smoking substitute device according to claim 1, wherein:
the smoking substitute device is configured to re-enable one or more previously disabled functions of the smoking substitute device if the smoking substitute device determines that an audio signal obtained by the audio interface contains speech uttered by a user whose voice has been registered by the smoking substitute device as being valid for use with the smoking substitute device.

3. A smoking substitute device according to claim 1 or 2, wherein:
the smoking substitute device is configured to re-enable one or more previously disabled functions of the smoking substitute device if the smoking substitute device determines that an audio signal obtained by the audio interface both:
(i) contains speech uttered by a user whose voice has been registered by the smoking substitute device as being valid for use with the smoking substitute device; and
(ii) contains a command for controlling operation of the smoking substitute device.

4. A smoking substitute device according to any preceding claim, wherein the smoking substitute device is configured to permit control of the smoking substitute device based on an analysis of an audio signal obtained by the audio interface using the natural language processing model, only if the smoking substitute device determines that the audio signal contains speech uttered by a user whose voice has been registered by the smoking substitute device as being valid for use with the smoking substitute device.

5. A smoking substitute device according to any preceding claim, wherein the one or more functions of the smoking substitute device that are configured to be disabled includes: permitting activation of the smoking substitute device to produce vapour.

6. A smoking substitute device according to any preceding claim, wherein the smoking substitute device includes a natural language processing chip which contains the natural language processing model and is configured to perform the voice recognition function.

7. A smoking substitute device according to any preceding claim, wherein the speech control function includes:
using a natural language processing model to analyse the recognised words spoken by the user and to recognise a command expressed in a natural language form within the recognised words; and
controlling operation of the smoking substitute device based on the analysis of the recognised words spoken by the user to implement the recognised command.

8. A smoking substitute device according to any preceding claim, wherein the smoking substitute device is configured to, if a confidence level associated with a command recognised by the natural language processing model is less than a predetermined threshold value, perform a verification function to verify the command intended to be executed by the user, wherein the verification function includes:
using an output device of the smoking substitute device or a mobile device wirelessly connected to the smoking substitute device to produce an output asking the user to verify whether the recognised command should be implemented; and
if, in response to the output, the user verifies that they want to implement the recognised command, controlling operation of the smoking substitute device to implement the recognised command.

9. A smoking substitute device according to claim 8, wherein the verification function further includes:
using a natural language processing model to generate a sequence of words asking the user to verify whether the recognised command should be implemented;
using an output device of the smoking substitute device or a mobile device wirelessly connected to the smoking substitute device to produce an output which provides the sequence of words to the user; and
if, in response to the output, the user verifies that they want to implement the recognised command, controlling operation of the smoking substitute device to implement the recognised command.

10. A smoking substitute device according to any preceding claim, wherein the smoking substitute device is configured to perform a usage feedback function that includes:
using a natural language processing model to generate a sequence of words for providing feedback to a user in relation to their usage of the smoking substitute device; and
using an output device of the smoking substitute device or a mobile device wirelessly connected to the smoking substitute device to provide the sequence of words to the user.

11. A smoking substitute device according to any preceding claim, wherein the smoking substitute device is configured to prevent the audio signal obtained by the audio interface and/or recognised words spoken by the user from being communicated from the device to an external device.

12. A smoking substitute device according to any preceding claim, wherein:
the natural language processing model is stored in one or more natural language processing chips included in the smoking substitute device; and/or
the natural language processing model is stored in one or more processors included in the smoking substitute device, wherein the one or more processors are configured to implement one or more recurrent neural network machine learning algorithms.

13. A smoking substitute device according to any preceding claim, wherein the smoking substitute device is further configured to disable one or more functions of the device if the smoking substitute device determines that an audio signal obtained by the audio interface does not contain speech uttered by a user whose voice has been registered by the smoking substitute device as being valid for use with the smoking substitute device.

14. A method of controlling a smoking substitute device according to any preceding claim, wherein the method comprising the smoking substitute device performing a speech control function that includes:
recognising words spoken by a user in an audio signal obtained by the audio interface;
using a natural language processing model to analyse the recognised words spoken by the user; and
controlling an operation of the smoking substitute device based on the analysis of the recognised words spoken by the user.

15. A computer readable medium comprising a computer readable instructions configured to, when executed, cause a smoking substitute device according to any preceding claim to perform a method of controlling a smoking substitute device, wherein the method comprising the smoking substitute device performing a speech control function that includes:
recognising words spoken by a user in an audio signal obtained by the audio interface;
using a natural language processing model to analyse the recognised words spoken by the user; and
controlling an operation of the smoking substitute device based on the analysis of the recognised words spoken by the user.
